# EUROPEAN PATENT APPLICATION

(11) **EP 4 708 615 A1**
(43) Date of publication of application: **11.03.2026**
(21) Application number: 25178564.8
(22) Date of filing: 23.05.2025
(51) Int. Cl.: H02J 7/00

(54) **INTEGRATED BATTERY MANAGEMENT SYSTEM AND BATTERY PACK INCLUDING THE SAME**

(30) Priority: 09.09.2024 KR 20240122118
(71) Applicant: SAMSUNG SDI CO., LTD., Yongin-si, Gyeonggi-do 17084 (KR)
(72) Inventor: BAE, Jin Cheol, 16678 Suwon-si (KR)
(74) Representative: Marks & Clerk LLP

(57) **Abstract**

An integrated battery management system, including a first circuit board on which a wireless communication unit is mounted, and a second circuit board on which a microcontroller unit is mounted, the second circuit board being a predetermined distance above the first circuit board.

## Description

### BACKGROUND

### 1. Field

The present disclosure relates to an integrated battery management system and a battery pack including the same.

### 2. Description of the Related Art

A battery pack applied to electric vehicles or the like may include a plurality of battery packs, each including a battery module and a secondary battery management system (BMS) that manages the battery module. In addition, the battery pack may further include a primary BMS that receives battery status data of the battery module from a plurality of secondary BMSs and integrally manages the battery status data, and a battery disconnect unit (BDU) that monitors a battery pack current flowing in the battery pack.

The above information disclosed in this Background section is for enhancement of understanding of the background of the present disclosure, and therefore, it may contain information that does not constitute related (or prior) art.

### SUMMARY

Embodiments include an integrated battery management system, including a first circuit board on which a wireless communication unit is mounted, and a second circuit board on which a microcontroller unit is mounted, the second circuit board being a predetermined distance above the first circuit board.

The integrated battery management system may further include a support member between the first circuit board and the second circuit board.

The first circuit board and the second circuit board may transmit and receive data and power in an insulated state.

The first circuit board may further include a pack current measuring unit configured to measure a current of a battery pack, a pack voltage measuring unit configured to measure a voltage of the battery pack, an insulation resistance measuring unit configured to measure insulation resistance of the battery pack, an insulated communication processing unit configured to transmit and receive data and power to and from the microcontroller unit in an insulated state, a pyro fuse unit configured to control a pyro fuse, and a power DC/DC unit configured to supply a power voltage.

The pack current measuring unit may include a shunt resistor.

The power DC/DC unit may supply a voltage through insulation between a low voltage region and a high voltage region.

The microcontroller unit of the second circuit board may be configured to control operation of the integrated battery management system, wherein the second circuit board may include a power supply unit configured to supply power, a controller area network communication unit, and a relay driving unit configured to drive a relay under control of the microcontroller unit.

Embodiments include an integrated battery management system, including a backplane controller including a wireless communication unit, and a core controller including a microcontroller unit, the core controller being a predetermined distance above the backplane controller, wherein the backplane controller and the core controller are stacked.

The integrated battery management system may further include a support member between the backplane controller and the core controller to support the core controller.

The backplane controller and the core controller may transmit and receive data and power in an insulated state.

The backplane controller may include the wireless communication unit, a pack current measuring unit configured to measure a current of a battery pack, a pack voltage measuring unit configured to measure a voltage of the battery pack, an insulation resistance measuring unit configured to measure insulation resistance of the battery pack, an insulated communication processing unit configured to transmit and receive data and power to and from the microcontroller unit in an insulated state, a pyro fuse unit configured to control a pyro fuse, and a power DC/DC unit configured to supply a power voltage.

The power DC/DC unit may supply the power voltage through insulation between a low voltage region and a high voltage region.

The microcontroller unit may be configured to control operation of the integrated battery management system, and wherein the core controller may include the microcontroller unit, a power supply unit configured to supply power, a controller area network communication unit, and a relay driving unit configured to drive a relay under control of the microcontroller unit.

Embodiments include a battery pack, including a plurality of battery modules, a plurality of secondary battery management systems respectively connected to the plurality of battery modules to monitor battery status information of a corresponding battery module, and an integrated battery management system configured to receive the battery status information from the plurality of secondary battery management systems via wireless communication, integrally manage the battery status information, and measure at least one of a battery pack voltage and a battery pack current to diagnose a state of the battery pack, wherein the integrated battery management system includes a first circuit board on which a wireless communication unit is mounted, and a second circuit board on which a microcontroller unit is mounted, the second circuit board being a predetermined distance above the first circuit board.

The integrated battery management system may further include a support member between the first circuit board and the second circuit board.

The first circuit board and the second circuit board may transmit and receive data and power in an insulated state.

The first circuit board may further include a pack current measuring unit configured to measure a current of the battery pack, a pack voltage measuring unit configured to measure a voltage of the battery pack, an insulation resistance measuring unit configured to measure insulation resistance of the battery pack, an insulated communication processing unit configured to transmit and receive data and power to and from the microcontroller unit in an insulated state, a pyro fuse unit configured to control a pyro fuse, and a power DC/DC unit configured to supply a power voltage.

The pack current measuring unit may include a shunt resistor.

The power DC/DC unit may supply a voltage through insulation between a low voltage region and a high voltage region.

The microcontroller unit may be configured to control operation of the integrated battery management system, wherein the second circuit board may include the microcontroller unit, a power supply unit configured to supply power, a controller area network communication unit, and a relay driving unit configured to drive a relay under control of the microcontroller unit.

At least some of the above and other features of the invention are set out in the claims.

However, objects that the present disclosure intends to achieve are not limited to the above-described objects and other objects that are not described may be clearly understood by those of ordinary skill in the art from the following description.

### BRIEF DESCRIPTION OF THE DRAWINGS

Features will become apparent to those of ordinary skill in the art by describing in detail example embodiments with reference to the attached drawings, in which:
FIG. 1 is a diagram schematically showing a configuration of a battery pack for comparison;
FIG. 2 is a diagram schematically showing a configuration of a battery pack according to one or more embodiments of the present disclosure;
FIG. 3 is a conceptual diagram for describing a circuit system of an integrated BMS according to one or more embodiments of the present disclosure;
FIG. 4 is a diagram for describing the configurations of a first circuit board and a second circuit board shown in FIG. 3;
FIG. 5 is an example diagram for describing the operation of a power DC-DC unit shown in FIG. 4; and
FIG. 6 is a conceptual diagram for describing a circuit system of an integrated BMS according to one or more other embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her embodiments in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

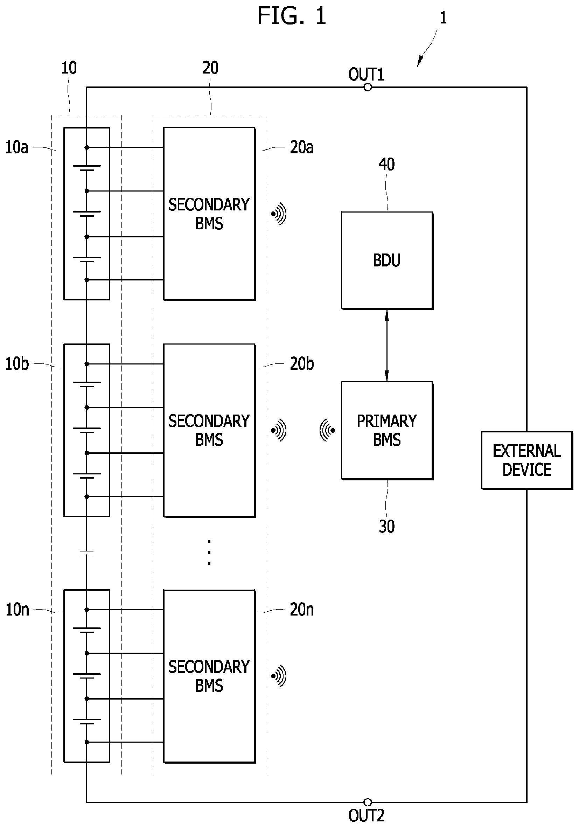

FIG. 1 is a diagram schematically showing a configuration of a battery pack for comparison.

Referring to FIG. 1, battery pack 1 may include a plurality of battery modules 10a, 10b, ..., 10n (hereinafter referred to as '10'), a plurality of secondary BMSs 20a, 20b, ..., 20n (hereinafter referred to as '20'), a primary BMS 30, and a battery disconnect unit (BDU) 40. The battery pack 1 is configured to supply power to an external device connected to output terminals OUT1 and OUT2 of the battery pack 1. The battery pack may further include a relay and/or a pyro fuse. The relay may be connected between the battery pack and the external device and is configured to be turned on or off to connect and disconnect the battery pack 1 and the external device. The pyro fuse may be connected between the battery pack and the external device and is configured to be activated to disconnect the external device from the battery pack 1.

The plurality of battery modules 10 may include a plurality of battery cells connected in series and/or in parallel. In one or more embodiments, the battery cells may be rechargeable secondary batteries.

The plurality of secondary BMSs 20 may be disposed to correspond one-to-one with the plurality of battery modules 10. Each of the plurality of secondary BMSs 20 may be electrically coupled to one of the battery modules 10 in which it is installed among the plurality of battery modules 10. Therefore, the number of secondary BMSs 20 may be the same as the number of battery modules 10.

The secondary BMS 20 may measure battery status information for the battery module 10 electrically connected to the secondary BMS 20. Here, the battery status information may include at least one of a cell voltage, a cell current, and a cell temperature of each battery cell included in each battery module 10. In addition, the battery status information may include at least one of a module voltage that is a voltage across both ends of the battery module 10, and a module current that is a current flowing in the battery module 10.

The secondary BMS 20 may be provided with a wireless communication unit and may transmit the measured battery status information to the primary BMS 30 via the wireless communication unit.

In addition, the secondary BMS 20 may perform a cell balancing function for the battery cells included in the battery module 10. The cell balancing function may include, for example, redistributing the charge across a plurality or all of the battery cells in the battery module 10 to minimize variance of the state of charge (SOC) of the battery cells included in the battery module. For example, the redistribution of charge is such that following cell rebalancing each battery cell included in the battery module has the same SOC.

The primary BMS 30 may communicate wirelessly with each of the plurality of secondary BMSs 20 to transmit various control signals or receive the battery status information (signals indicating the battery status information).

The primary BMS 30 may receive the battery status information of the battery modules 10 from one or more of the plurality of secondary BMSs 20 via wireless communication and integrally manage (the one or more battery modules via the respective secondary BMSs) based on the battery status information.

The primary BMS 30 may generate a control command for the secondary BMS 20 and the BDU 40 based on the battery status information received from the secondary BMS 20 and the BDU 40 and transmit the control command to the secondary BMS 20 and the BDU 40. The primary BMS 30 may diagnose the statuses of the battery cell and the battery module 10 based on the battery status information, and may transmit the control command to the secondary BMS 20 and the BDU 40 based on the diagnosis results. The diagnosis operation may include, for example, determining whether a leakage current is flowing, determining a stage of health (SOH) of the battery cell or module, or determining insulation resistance.

The primary BMS 30 may include a wireless communication unit, a main control unit (MCU), a power supply unit, a controller area network (CAN) communication unit, a relay driving unit, a high voltage interlock (HVIL) unit, and a retention unit.

The BDU 40 may include high voltage operating elements connected to the battery pack 1 and monitor a battery pack current flowing in the battery pack 1, a battery pack voltage, etc.

The BDU 40 may perform functions and roles such as preventing battery discharge, protecting a battery and enhancing safety when storing a vehicle, preventing theft, providing safety during electrical system maintenance, and maintaining safety in an emergency situation.

This BDU 40 may include one or more of an insulation resistance measuring unit, a pack current measuring unit, a pack voltage measuring unit, a pyro fuse unit, etc.

The primary BMS 30 and the BDU 40 may be connected by wires such as cables, and thus may transmit and receive information through wired communication.

However, when the primary BMS 30 and the BDU 40 are connected by wires, the communication line becomes complicated and there is a concern that a poor wired connection, etc. may occur, which may cause an accident in the battery pack 1.

Therefore, the present disclosure proposes a technology that integrates the primary BMS 30 and the BDU 40 into one system. The integrated system reduces the number and/or length of wires or other physical connection means, thereby reducing the complexity of the communication line and reducing the risk of a poor wired connection occurring. Thus, the size and complexity of the system is reduced and the safety of the system is improved.

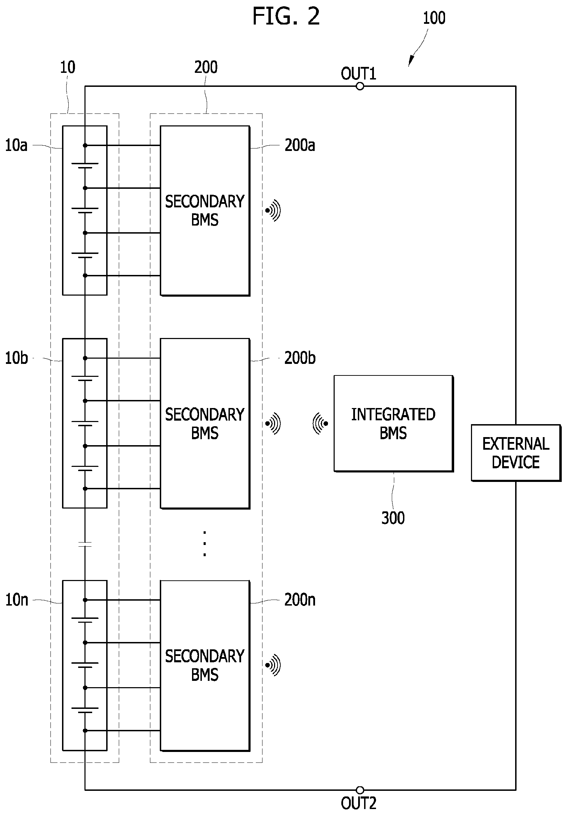

FIG. 2 is a diagram schematically showing a configuration of a battery pack according to one or more embodiments of the present disclosure.

Referring to FIG. 2, a battery pack 100 according to one or more embodiments of the present disclosure may include a plurality of battery modules 10a, 10b, ..., 10n (hereinafter referred to as '10'), a plurality of secondary BMSs 200a, 200b, ..., 200n (hereinafter referred to as '200'), and an integrated BMS 300. The battery pack 1 is configured to supply power to an external device connected to output terminals OUT1 and OUT2 of the battery pack 1. The battery pack may further include a relay and/or a pyro fuse. The relay may be connected between the battery pack and the external device and is configured to be turned on or off to connect and disconnect the battery pack 1 and the external device. The pyro fuse is connected between the battery pack and the external device and may be configured to be activated to disconnect the external device from the battery pack 1.

The battery module 10 may include a plurality of battery cells connected in series and/or in parallel. In some embodiments, the battery cells may be rechargeable secondary batteries.

The plurality of secondary BMSs 200 may be disposed to correspond one-to-one with the plurality of battery modules 10. Each of the plurality of secondary BMSs 200 may be electrically coupled to one of the battery modules 10 in which it is installed among the plurality of battery modules 10. Therefore, the number of secondary BMSs 200 may be the same as the number of battery modules 10.

For example, a first secondary BMS 200a may be electrically coupled to a first battery module 10a, a second secondary BMS 200b may be electrically coupled to a second battery module 10b, and a last secondary BMS 200n may be electrically coupled to an nth battery module 10n.

The secondary BMS 200 may measure the battery status information for the battery module 10 electrically connected to the secondary BMS 200 and transmit the measured battery status information to the integrated BMS 300 via wireless communication. Here, the battery status information may include at least one of a cell voltage, a cell current, and a cell temperature of each battery cell included in each battery module 10. In addition, the battery status information may include at least one of a module voltage that is a voltage across both ends of the battery module 10, and a module current that is a current flowing in the battery module 10.

The secondary BMS 200 may include a wireless communication unit. For example, the wireless communication unit may be implemented as an antenna. In another example, the wireless communication unit may include an RFIC (Radio Frequency Integrated Circuit). The secondary BMS 200 may perform wireless communication with the integrated BMS 300 based on radio frequency (RF) signals through the wireless communication unit. For example, the secondary BMS 200 may transmit battery status data to the integrated BMS 300 through the wireless communication unit. In some embodiments, the plurality of secondary BMSs 200 are configured to wirelessly communicate via a single wireless communication unit. In other embodiments, each secondary BMS of the plurality of secondary BMSs 200 includes a wireless communication unit and are each separately configured to wirelessly communicate with the integrated BMS 300.

In addition, the secondary BMS 200 may perform a cell balancing function for the battery cells included in the battery pack 10. That is, the secondary BMS 200 may monitor a plurality of cell voltages of the plurality of battery cells and temperatures of the plurality of battery cells that constitute the battery pack 10, and perform cell balancing. The secondary BMS 200 may transmit the battery status information to the integrated BMS 300 via wireless communication and receive a control command related to monitoring and cell balancing from the integrated BMS 300. For example, each BMS of the plurality of secondary BMSs 200 may transmit the battery status information for the battery cell to which the respective BMS is coupled, and each BMS may receive a control command related to monitoring and cell balancing from the integrated BMS 300.

The integrated BMS 300 is a configuration that integrally controls the battery pack 100, and may be operatively coupled to the plurality of secondary BMSs 200 via wireless communication.

The integrated BMS 300 is a configuration that performs the functions of the primary BMS 30 and the BDU 40, and the integrated BMS 300 may receive the battery status information from the plurality of secondary BMSs 200 via wireless communication and integrally manage the battery module 10 based on the battery status information, and diagnose the status of the battery pack 100 by measuring at least one of the battery pack voltage and the battery pack current.

The integrated BMS 300 may wirelessly communicate with each of the plurality of secondary BMSs 200 to transmit various control signals or receive the battery status information. The integrated BMS 300 may calculate a state of charge (SOC), a state of health (SOH), etc. of each battery module 10 based on the battery status information received from the secondary BMS 200, or determine whether each battery module 10 has an overvoltage or undervoltage or is overcharged or overdischarged. Different methods known in the art may be deployed for determining the SOC, SOH, overvoltage, undervoltage, overcharge or overdischarge. For example, the battery status information that is received may include a voltage reading of the battery cell, and the integrated BMS 300 may determine a SOC corresponding to the voltage using a known discharge curve. The SOH can be determined via measuring one or more parameters indicative of SOH, such as internal resistance, battery capacity, number of charge-discharge cycles, etc.

The integrated BMS 300 may be connected to a higher-level controller. The integrated BMS 300 may transmit information about the status and control of a battery to the higher-level controller or control the operation of the battery pack 100 based on a control signal applied from/received from the higher-level controller. The integrated BMS 300 may communicate with the higher-level controller to receive a command and/or information, and manage and control at least one of the secondary BMSs 200 included in the battery pack 100 according to the received command. Here, the higher-level controller may be a control unit of a higher-level system (for example, a vehicle, an ESS (Energy Storage System), etc.) in which the battery pack 100 is mounted.

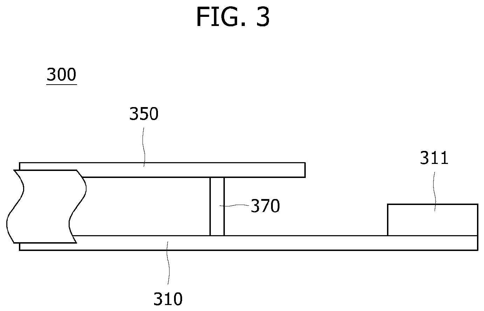

Meanwhile, the integrated BMS 300 may be provided on a circuit board to be implemented as a circuit system including different voltage regions by merging the primary BMS 30 and the BDU 40 during circuit design. The detailed description of the circuit board of the integrated BMS 300 will be provided with reference to FIG. 3.

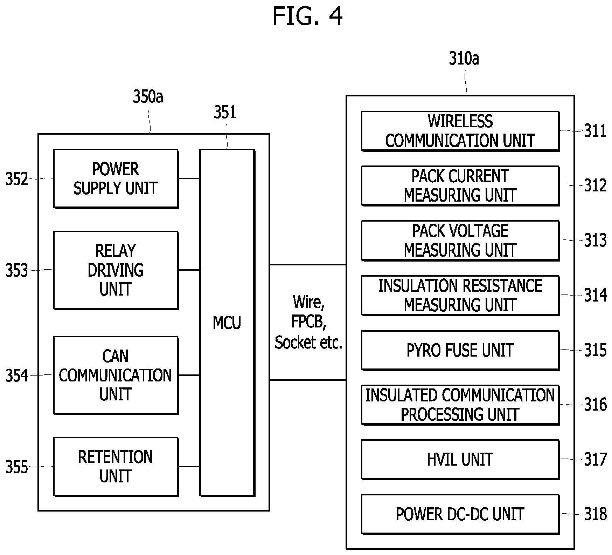

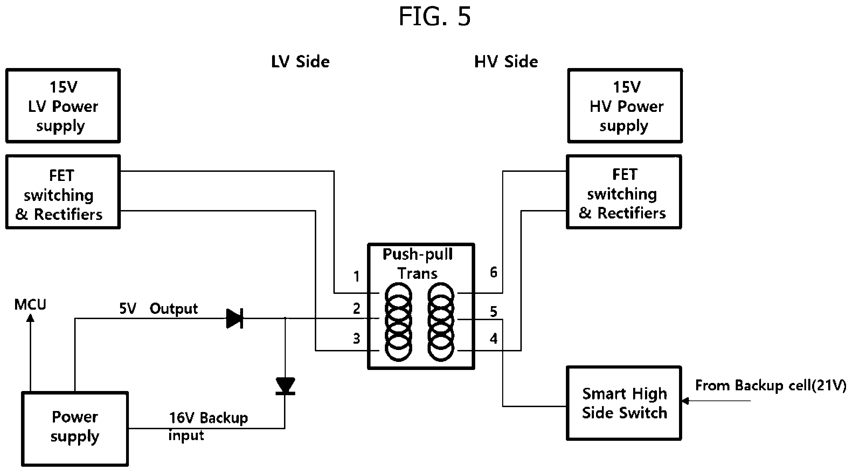

FIG. 3 is a conceptual diagram for describing a circuit system of an integrated BMS according to one or more embodiments of the present disclosure, FIG. 4 is a diagram (block diagram) for describing the configurations of a first circuit board and a second circuit board shown in FIG. 3, and FIG. 5 is an example diagram for describing the operation of a power DC-DC unit shown in FIG. 4.

Referring to FIG. 3, an integrated BMS 300 according to one or more embodiments of the present disclosure may include a first circuit board 310, a second circuit board 350, and a support member 370, and may have a two-layer structure in a stacked form. For example, the first circuit board 310 and second circuit board 350 are arranged on top of one another such that the planes of the first circuit board 310 and second 320 at least partially overlap. That is, the integrated BMS 300 may not be a single circuit board, but may be designed to have a stacked form of the first circuit board 310 and the second circuit board 350, which are different from each other.

The support member 370 may be disposed between the first circuit board 310 and the second circuit board 350 and may support the second circuit board 350 to be located above the first circuit board 310. The support member 370 may be implemented with an insulating material, etc.

The first circuit board 310 and the second circuit board 350 may be disposed a predetermined distance apart. For example, the first circuit board 310 and the second circuit board 350 may be disposed a predetermined distance apart in a stacked form. The first circuit board 310 and the second circuit board 350 may be physically separated from each other and connected by connecting elements. In this case, the first circuit board 310 and the second circuit board 350 may be interconnected through various connecting elements. For example, the first circuit board 310 and the second circuit board 350 may be connected by various connecting methods such as wires, flexible printed circuit boards (FPCBs), and sockets.

The second circuit board 350 may be disposed a predetermined distance above the first circuit board 310.

The second circuit board 350 may be a component in which core functions of the integrated BMS 300 are implemented, and a core controller 350a (see FIG. 4) including an MCU 351 may be provided on the second circuit board 350.

As shown in FIG. 4, the MCU 351, a power supply unit 352, a relay driving unit 353, and a controller area network (CAN) communication unit 354 may be mounted on the second circuit board 350. A retention unit 355, a pressure sensor, etc. for preventing malfunctions may be additionally mounted on the second circuit board 350. Therefore, the core controller 350a may include the MCU 351, the power supply unit 352, the relay driving unit 353, the CAN communication unit 354, and the retention unit 355 (or pressure sensor).

The MCU 351 may analyze the battery status information about the battery modules 10 to determine the status of the battery modules 10 and control the necessary management operation according to the determined status. For example, if there is a battery cell that requires cell balancing in the battery module 10, the MCU 351 may control the secondary BMS 200 to perform cell balancing (for example, the MCU 351 may instruct individual BMSs of the plurality of BMSs to perform the cell balancing). The MCU 351 may accumulate (e.g., monitor) the battery pack current to estimate the SOC of the battery pack 100 and control charging and discharging based on the estimated SOC. The MCU 351 may determine whether a protective operation is required for the battery module 10 based on the battery status information, and initiate the protective operation when the protective operation is necessary. The protective operation may include controlling the on/off of the relay by operating the relay driving unit 353 and/or may include controlling the pyro fuse.

The MCU 351 may perform a diagnosis for stuck close/open status of the pyro fuse, etc. based on the battery pack voltage. The MCU 351 may control the on/off of a relay based on the battery pack current.

The power supply unit 352 may supply power to components mounted on the second circuit board 350.

The relay driving unit 353 may be a configuration that drives the relay under the control of the MCU 351, and may include a high side driver (HSD) and a low side driver (LSD). The relay may be a mechanical contactor that is turned on and off by the magnetic force of a coil or a semiconductor switch such as a metal-oxide-semiconductor field-effect transistor (MOSFET).

Relay control may serve to cut off power supply from the battery when a problem occurs in a vehicle or a battery system, and may be configured with one or more relays and precharge relays at a positive terminal and a negative terminal, respectively.

The CAN communication unit 354 may be a wired communication module, and may communicate with other devices or other modules or components within the device using the CAN communication unit 354. The CAN communication unit 354 may also perform a wired communication function with an external device (for example, a higher-level controller, a vehicle, a charger, a PCS (Personal Communications Service), etc.) of the battery pack 100.

Meanwhile, the core controller 350a may further include a power DC-DC unit. The power DC-DC unit may supply a voltage through insulation between a low voltage region and a high voltage region. The power DC-DC unit may be an isolated converter, and may be implemented as, for example, a flyback converter, but other types of converters may be possible.

As described above, the components mounted on the second circuit board 350 may be platformized (or compactized). That is, the core controller 350a may be platformized (or compactized). Therefore, the second circuit board 350 (i.e., the core controller 350a) can be applied to various products, thereby reducing costs and ensuring the reliability and robustness of the product.

The first circuit board 310 may be a backplane, and a backplane controller 310a including a wireless communication unit 311 may be provided on the first circuit board 310.

As shown in FIG. 4, the wireless communication unit 311, a pack current measuring unit 312, a pack voltage measuring unit 313, an insulation resistance measuring unit 314, a pyro fuse unit 315, an insulated communication processing unit 316, a high voltage interlock (HVIL) unit 317, and a power DC-DC unit 318 may be mounted (installed) on the first circuit board 310. Therefore, the backplane controller 310a may include the wireless communication unit 311, the pack current measuring unit 312, the pack voltage measuring unit 313, the insulation resistance measuring unit 314, the pyro fuse unit 315, the insulated communication processing unit 316, the high voltage interlock (HVIL) unit 317, the power DC-DC unit 318, etc.

The wireless communication unit 311 (see FIG. 3) is a configuration for communication with the secondary BMS 200 and may be configured with, for example, a radio frequency integrated circuit (RFIC), but other components are possible. The wireless communication unit 311 may receive the battery status information from the secondary BMS 200 or transmit a control command related to monitoring and cell balancing to the secondary BMS 200.

The pack current measuring unit 312 may measure a battery pack current flowing in the battery pack 10. The pack current measuring unit 312 may transmit the measured battery pack current to the MCU 351 of the second circuit board via the insulated communication processing unit 316. The pack current measuring unit 312 may be implemented with a shunt resistor and an analog front end (AFE) IC (integrated circuit). The shunt resistor is a sensor located on a path through which the battery pack current flows, and may measure the battery pack current.

The pack voltage measuring unit 313 may be connected to the battery pack to measure a battery pack voltage of the battery pack 100. In addition, the pack voltage measuring unit 313 may measure a voltage of a node having a high voltage such as a voltage of both ends of a pyro fuse and a voltage of both ends of a relay. In addition, the pack voltage measuring unit 313 may measure the voltage of the node having a high voltage.

The pack voltage measured by the pack voltage measuring unit 313 may be transmitted to the MCU 351 of the second circuit board 350 via the insulated communication processing unit 316, and the MCU 351 may perform a diagnosis for stuck close/open of the pyro fuse, the relay, etc. based on the pack voltage.

The insulation resistance measuring unit 314 may measure insulation resistance of the battery pack 100. The insulation resistance measuring unit 314 may measure the insulation resistance between a high voltage (HV) and a low voltage (LV). The insulation resistance measuring unit 314 may transmit a measured insulation resistance value to the MCU 351 of the second circuit board 350 via the insulated communication processing unit 316.

The MCU 351 may determine whether there is a leakage problem in the battery pack 100 based on the received insulation resistance value. For example, when the measured insulation resistance is less than a predetermined threshold value, the MCU 351 may determine that there is a problem with the insulation (electrical insulation) and a leakage current is flowing.

The pyro fuse unit 315 may generate a control signal for controlling the pyro fuse according to the control of the MCU 351 and transmit the control signal to the pyro fuse. That is, the pyro fuse unit 315 may receive a control command from the MCU 351 and control the pyro fuse. The pyro fuse may cut off the connection between the battery pack 100 and an external device.

The insulated (e.g., electrically insulated) communication processing unit 316 may be a configuration to enable the backplane controller 310a and the core controller 350a (i.e., MCU 351) to transmit and receive data and power in an insulated state. As described above, the first circuit board 310 and second circuit board 350 may be disposed a predetermined distance apart. In some embodiments, the predetermined distance may be the predetermined distance between the backplane controller 310a mounted on the first circuit board 310 and the core controller 350a mounted on the second circuit board 350.

The core controller 350a and the backplane controller 310a may have different voltage regions. For example, the core controller 350a may be a first voltage region, and the backplane controller 310a may be a second voltage region. Here, the first voltage region may be a high voltage region, and the second voltage region may be a low voltage region. In addition, since the first circuit board 310 and the second circuit board 350 are disposed a predetermined distance apart, the backplane controller 310a and the core controller 350a may exist in an insulated state. In the insulated state, the backplane controller 310a and the core controller 350a are electrically insulated from each other and configured to operate respectively as a first voltage region and a second voltage region. Thus, the backplane controller 310a and the core controller 350a should be able to transmit data and power to each other in an insulated state (e.g., an electrically insulated state). Accordingly, the core controller 350a and the backplane controller 310a may transmit and receive data and power in the insulated state via the insulated communication processing unit 316.

The insulated communication processing unit 316 may transmit the pack current value measured by the pack current measuring unit 312 and the pack voltage value measured by the pack voltage measuring unit 313 to the MCU 351 of the second circuit board 350.

The HVIL unit 317 is a circuit that detects using a small signal to check whether all high voltage components are connected to the entire system (e.g., an automobile system), and may be provided with a function to forcibly open the relay when a short or open circuit occurs at any point on the entire loop.

The power DC-DC unit 318 may supply a power voltage for operation of each component mounted on the first circuit board 310. The power DC-DC unit 318 may be an isolated converter, and may be implemented as, for example, a flyback converter, but other types of converters are possible.

As shown in FIG. 5, the power DC-DC unit 318 may supply a voltage through insulation between the low voltage region and the high voltage region. The power DC-DC unit 318 may be configured to supply a power voltage for each component mounted on second circuit board 350. The power DC-DC unit 318 may be configured to switch between voltage levels to supply components in the high voltage region or supply components in the low voltage region. For example, the power DC-DC unit 318 may switch 5V of the low voltage region (LV side) to supply 15V to the high voltage region (HV side). In addition, when a voltage of the low voltage region (LV side) becomes smaller than or equal to a preset threshold voltage, the power DC-DC unit 318 may switch 21V of the high voltage region (HV side) to supply 15V to the low voltage region (LV side).

Therefore, the power DC-DC unit 318 may have bi-directional characteristics.

Since the first circuit board 310 and the second circuit board 350 are disposed a predetermined distance apart, the backplane controller 310a and the core controller 350a may transmit data and power to each other in an insulated state.

Since the backplane controller 310a and the core controller 350a may be implemented in a stacked form, it is possible to perform circuit design more freely compared to conventional designs, thereby having an advantage in securing space.

In addition, since the core controller 350a can be platformized (or compactized), various products can be implemented by changing (varying) only the configuration of the backplane controller 310a disposed on the first circuit board 310 without changing the hardware.

In addition, the integrated BMS 300 can be implemented by integrating the conventional primary BMS 30 and the BDU 40 into one system, thereby reducing the size of the battery pack 100 and reducing PCB costs.

Meanwhile, in the present embodiment, the first circuit board 310 and the backplane controller 310a have been described separately, and the second circuit board 350 and the core controller 350a have been described separately, but the first circuit board 310 and the backplane controller 310a may be the same, and the second circuit board 350 and the core controller 350a may be the same.

In the present embodiment, the first circuit board 310 and the second circuit board 350 have been described as being designed in a stacked form, but the first circuit board 310 and the second circuit board 350 may also be designed in a structure in which they are horizontally disposed in parallel.

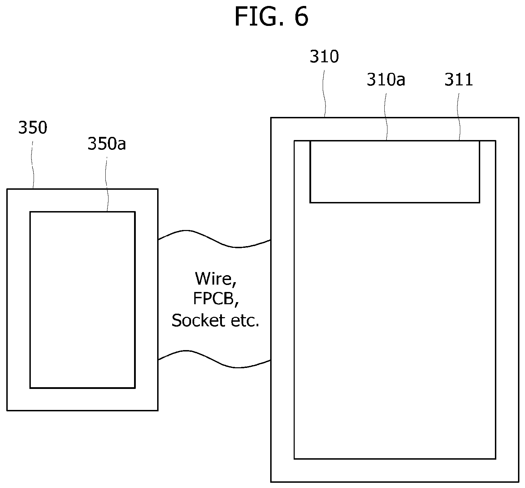

FIG. 6 is a conceptual diagram for describing a circuit system of an integrated BMS according to another embodiment of the present disclosure.

Referring to FIG. 6, an integrated BMS 300 according to another embodiment of the present disclosure may include a first circuit board 310 and a second circuit board 350.

The integrated BMS 300 may be designed so that the first circuit board 310 and the second circuit board 350, which are different from each other, are horizontally disposed in parallel rather than being designed as a single circuit board. In this case, the first circuit board 310 and the second circuit board 350 may be disposed a predetermined distance apart. The first circuit board 310 and the second circuit board 350 may be interconnected through various connecting elements. For example, the first circuit board 310 and the second circuit board 350 may be connected by various connecting methods such as wires, flexible printed circuit boards (FPCBs), and sockets.

The second circuit board 350 may be a component in which core functions of the integrated BMS 300 are implemented, and a core controller including an MCU 351 may be provided on the second circuit board 350. Since the core controller 350a is the same as that in FIG. 4, its description will be omitted.

The components mounted on the second circuit board 350 may be platformized (or compactized). That is, the core controller 350a may be platformized (or compactized). Therefore, the second circuit board 350 (i.e., the core controller 350a) can be applied to various products, thereby reducing costs and ensuring the reliability and robustness of the product.

The first circuit board 310 may be a backplane, and a backplane controller 310a including a wireless communication unit 311 may be provided on the first circuit board 310. Since the backplane controller 310a is the same as that in FIG. 4, its description will be omitted.

The first circuit board 310 and the second circuit board 350 are disposed a predetermined distance apart (horizontally), and the core controller 350a and the backplane controller 310a may have different voltage regions. For example, the core controller 350a may be a first voltage region, and the backplane controller 310a may be a second voltage region. Here, the first voltage region may be a high voltage region, and the second voltage region may be a low voltage region. Therefore, the backplane controller 310a and the core controller 350a may transmit data and power to each other in an insulated state.

Since the core controller 350a can be platformized (or compactized) in the integrated BMS 300 configured as described above, various products can be implemented by changing (varying) only the configuration of the backplane controller 310a disposed on the first circuit board 310 without changing the hardware. In addition, the integrated BMS 300 can be implemented by integrating the primary BMS 30 and the BDU 40 into one system, thereby reducing the size of the battery pack 100 and reducing PCB costs.

As such, according to the present disclosure, the size of a battery pack can be reduced by implementing an integrated BMS that handles both a primary BMS function and a BDU function.

As used in the specification, the term "unit" may include a unit implemented in hardware, software, or firmware and for example, may be used interchangeably with terms such as a logic, a logic block, a component, or a circuit. The term "unit" may be an integrated component or a minimum unit of the component or a portion thereof that performs one or more functions. For example, according to one or more embodiments, the term "unit" may be implemented in the form of an application-specific integrated circuit (ASIC).

The implementation described in the specification may be implemented, for example, as a method or process, device, a software program, a data stream, or a signal. Although described only in the context of the implementation of a single form (e.g., only a method is described), the implementations of the described features may also be implemented in other forms (e.g., a device or a program). The device may be implemented with appropriate hardware, software, firmware, or the like. The method may be implemented in a device, for example, a processor, etc. that generally refers to a processing device including a computer, a microprocessor, an integrated circuit, a programmable logic device, or the like. The processor includes a communication device such as a computer, a cell phone, a portable/personal digital assistant (PDA), and other devices, which facilitate information communication between end-users.

Recently, in order to solve problems such as poor quality of electrical wiring related to wire cables and connectors and frequent maintenance problems, communication between the primary BMS and the plurality of secondary BMSs is being implemented wirelessly.

However, since the primary BMS and the BDU are connected by cables, etc., there is a concern that poor cable connection, etc. may occur, which may cause an accident in the battery pack.

The present disclosure is directed to providing an integrated battery management system that can reduce the size of a battery pack by implementing an integrated BMS that handles both a primary battery management system (primary BMS) function and a battery disconnect unit (BDU) function, and a battery pack including the same.

According to the present disclosure, the size of a battery pack can be reduced by implementing an integrated BMS that handles both a primary BMS function and a BDU function.

However, effects that can be achieved through the present disclosure are not limited to the above-described effects and other effects that are not described may be clearly understood by those skilled in the art from the detailed descriptions.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.
Further Embodiments are set out in the following clauses:
Clause 1. An integrated battery management system, comprising:
   a first circuit board on which a wireless communication unit is mounted; and
   a second circuit board on which a microcontroller unit is mounted, the second circuit board being a predetermined distance above the first circuit board.
Clause 2. The integrated battery management system of clause 1, further comprising a support member between the first circuit board and the second circuit board.
Clause 3. The integrated battery management system of clause 1 or clause 2, wherein the first circuit board and the second circuit board transmit and receive data and power in an insulated state.
Clause 4. The integrated battery management system of any preceding clause, wherein the first circuit board further includes:
   a pack current measuring unit configured to measure a current of a battery pack;
   a pack voltage measuring unit configured to measure a voltage of the battery pack;
   an insulation resistance measuring unit configured to measure insulation resistance of the battery pack;
   an insulated communication processing unit configured to transmit and receive data and power to and from the microcontroller unit in an insulated state;
   a pyro fuse unit configured to control a pyro fuse; and
   a power DC/DC unit configured to supply a power voltage.
Clause 5. The integrated battery management system of clause 4, wherein the pack current measuring unit includes a shunt resistor.
Clause 6. The integrated battery management system of clause 4 or clause 5, wherein the power DC/DC unit supplies a voltage through insulation between a low voltage region and a high voltage region.
Clause 7. The integrated battery management system of any preceding clause, wherein the microcontroller unit of the second circuit board is configured to control operation of the integrated battery management system, and wherein the second circuit board includes:
   a power supply unit configured to supply power;
   a controller area network communication unit; and
   a relay driving unit configured to drive a relay under control of the microcontroller unit.
Clause 8. An integrated battery management system, comprising:
   a backplane controller including a wireless communication unit; and
   a core controller including a microcontroller unit, the core controller being a predetermined distance above the backplane controller,
   wherein the backplane controller and the core controller are stacked.
Clause 9. The integrated battery management system of clause 8, further comprising a support member between the backplane controller and the core controller to support the core controller.
Clause 10. The integrated battery management system of clause 8 or clause 9, wherein the backplane controller and the core controller transmit and receive data and power in an insulated state.
Clause 11. The integrated battery management system of any one of clauses 8 - 10, wherein the backplane controller includes:
   the wireless communication unit;
   a pack current measuring unit configured to measure a current of a battery pack;
   a pack voltage measuring unit configured to measure a voltage of the battery pack;
   an insulation resistance measuring unit configured to measure insulation resistance of the battery pack;
   an insulated communication processing unit configured to transmit and receive data and power to and from the microcontroller unit in an insulated state;
   a pyro fuse unit configured to control a pyro fuse; and
   a power DC/DC unit configured to supply a power voltage.
Clause 12. The integrated battery management system of clause **11,** wherein the power DC/DC unit supplies the power voltage through insulation between a low voltage region and a high voltage region.
Clause 13. The integrated battery management system of any one of clauses 8 - 12, wherein the microcontroller unit is configured to control operation of the integrated battery management system, and wherein the core controller includes:
   the microcontroller unit;
   a power supply unit configured to supply power;
   a controller area network communication unit; and
   a relay driving unit configured to drive a relay under control of the microcontroller unit.
Clause 14. A battery pack, comprising:
   a plurality of battery modules;
   a plurality of secondary battery management systems respectively connected to the plurality of battery modules to monitor battery status information of a corresponding battery module; and
   an integrated battery management system configured to:
      receive the battery status information from the plurality of secondary battery management systems via wireless communication;
      integrally manage the battery status information; and
      measure at least one of a battery pack voltage and a battery pack current to diagnose a state of the battery pack,
   wherein the integrated battery management system includes:
      a first circuit board on which a wireless communication unit is mounted; and
      a second circuit board on which a microcontroller unit is mounted, the second circuit board being a predetermined distance above the first circuit board.
Clause 15. The battery pack of clause 14, wherein the integrated battery management system further includes a support member between the first circuit board and the second circuit board.

## Claims

1. An integrated battery management system, comprising:
a first circuit board on which a wireless communication unit is mounted; and
a second circuit board on which a microcontroller unit is mounted, the second circuit board being separated from the first circuit board by a predetermined distance.

2. The integrated battery management system as claimed in claim 1, wherein the predetermined distance is a predetermined distance above the first circuit board.

3. The integrated battery management system as claimed in claim 1 or claim 2, further comprising a support member between the first circuit board and the second circuit board.

4. The integrated battery management system as claimed in any preceding claim, wherein the first circuit board and the second circuit board transmit and receive data and power in an insulated state.

5. The integrated battery management system as claimed in any preceding claim, wherein the first circuit board further includes:
a pack current measuring unit configured to measure a current of a battery pack;
a pack voltage measuring unit configured to measure a voltage of the battery pack;
an insulation resistance measuring unit configured to measure insulation resistance of the battery pack;
an insulated communication processing unit configured to transmit and receive data and power to and from the microcontroller unit in an insulated state;
a pyro fuse unit configured to control a pyro fuse; and
a power DC/DC unit configured to supply a power voltage;
wherein, optionally, the pack current measuring unit includes a shunt resistor.

6. The integrated battery management system as claimed in claim 5, wherein the power DC/DC unit supplies a voltage through insulation between a low voltage region and a high voltage region.

7. The integrated battery management system as claimed in any preceding claim, wherein the microcontroller unit of the second circuit board is configured to control operation of the integrated battery management system, and wherein the second circuit board includes:
a power supply unit configured to supply power;
a controller area network communication unit; and
a relay driving unit configured to drive a relay under control of the microcontroller unit.

8. The integrated battery management system according to claim 1, wherein:
the first circuit board is a backplane and wherein the first circuit board comprises a backplane controller including the wireless communication unit; and
wherein the second circuit board comprises a core controller including the microcontroller unit,
wherein the backplane controller and the core controller are stacked.

9. The integrated battery management system as claimed in claim 8, further comprising a support member between the backplane controller and the core controller to support the core controller.

10. The integrated battery management system as claimed in claim 8 or claim 9, wherein the backplane controller and the core controller transmit and receive data and power in an insulated state.

11. The integrated battery management system as claimed in any one of claims 8 - 10, wherein the backplane controller further includes:
a pack current measuring unit configured to measure a current of a battery pack;
a pack voltage measuring unit configured to measure a voltage of the battery pack;
an insulation resistance measuring unit configured to measure insulation resistance of the battery pack;
an insulated communication processing unit configured to transmit and receive data and power to and from the microcontroller unit in an insulated state;
a pyro fuse unit configured to control a pyro fuse; and
a power DC/DC unit configured to supply a power voltage.

12. The integrated battery management system as claimed in claim 11, wherein the power DC/DC unit supplies the power voltage through insulation between a low voltage region and a high voltage region.

13. The integrated battery management system as claimed in any one of claims 8 - 12, wherein the microcontroller unit is configured to control operation of the integrated battery management system, and wherein the core controller further includes:
a power supply unit configured to supply power;
a controller area network communication unit; and
a relay driving unit configured to drive a relay under control of the microcontroller unit.

14. A battery pack, comprising:
a plurality of battery modules;
a plurality of secondary battery management systems respectively connected to the plurality of battery modules to monitor battery status information of a corresponding battery module; and
an integrated battery management system configured to:
receive the battery status information from the plurality of secondary battery management systems via wireless communication;
integrally manage the battery status information; and
measure at least one of a battery pack voltage and a battery pack current to diagnose a state of the battery pack,
wherein the integrated battery management system is an integrated battery management system according to any one of claims 1 - 13.

15. The battery pack as claimed in claim 14, wherein the integrated battery management system further includes a support member between the first circuit board and the second circuit board.
